# EUROPEAN PATENT APPLICATION

(11) **EP 4 057 303 A1**
(43) Date of publication of application: **14.09.2022**
(21) Application number: 20884352.4
(22) Date of filing: 23.03.2020
(51) Int. Cl.: H01F 27/28, H02M 3/335

(54) **PLANAR TRANSFORMER, CIRCUIT BOARD HAVING SAME AND POWER CONVERTER**

(30) Priority: 08.11.2019 CN 201911090375
(71) Applicant: Shenzhen Huntkey Electric Co., Ltd., Shenzen, Guangdong 518129 (CN)
(72) Inventor: XIAO, Minli, Shenzhen, Guangdong 518129 (CN)
(74) Representative: Wang, Bo
(86) International application number: PCT/CN2020/080759
(87) International publication number: WO 2021/088299

(57) **Abstract**

A planar transformer includes a primary coil layer, a secondary coil layer, and a shielding layer. The shielding layer is disposed between the primary coil layer and the secondary coil layer. A primary coil is disposed in the primary coil layer, and a secondary coil is disposed in the secondary coil layer. The shielding layer includes a shielding coil with one end connected to a first static electrical point and the other end suspended, and an auxiliary winding with one end connected to a second static electrical point. The auxiliary winding supplies power to a functional circuit of the planar transformer. The winding direction of the shielding coil is opposite to the winding direction of the secondary coil; the winding direction of the auxiliary winding is the same as the winding direction of the secondary coil.

## Description

This application claims the priority of the Chinese patent application No. 201911090375. 0, which is incorporated by reference herein in its entirety.

### FIELD OF THE INVENTION

The application relates to the field of planar transformers, in particular to a planar transformer, a power converter and a circuit board.

### BACKGROUND OF THE INVENTION

The common mode current of a transformer has a great impact on EMI (ElectroMagnetic Interference), so it is important to reduce the common-mode current caused by the primary coil as much as possible. Generally, in conventional transformers, the common-mode current is adjusted by adjusting the number of turns of the shielding winding of the transformer, to reduce the interference of EMI common-mode noise.

A Chinese patent of application No. 201711390939.3 discloses a planar transformer with a primary-secondary-primary structure, in which the shielding winding has one turn and the auxiliary winding has three turns. The common-mode current is adjusted by adjusting the number of turns in the composite winding. However, the solution has the defects of multiple PCB layers, complex process, high cost. The primary winding has a high operating voltage, and a relatively large potential difference is generated between it and the magnetic core, which may cause insulation breakdown between the magnetic core and the winding, and make the product less reliable.

### SUMMARY OF THE INVENTION

The purpose of the application is to overcome the defects of the prior art and provide a planar transformer and a power converter to reduce common mode current caused by the primary coil, thereby reduce interference of EMI common mode noise.

The technical solutions of the application is as follows:
According to a first aspect, an embodiment of the application discloses a planar transformer including a primary coil layer, a secondary coil layer, and a shielding layer, wherein the shielding layer is disposed between the primary coil layer and the secondary coil layer. The primary coil is disposed in the primary coil layer, and a secondary coil is disposed in the secondary coil layer. The shielding layer includes a shielding coil and an auxiliary winding. One end of the shielding coil is connected to a first static electrical point and the other end is suspended; and one end of the auxiliary winding is connected to a second static electrical point. The auxiliary winding is used to supply power to functional circuits of the planar transformer. The winding direction of the shielding coil is opposite to the winding direction of the secondary coil; the winding direction of the auxiliary winding is the same as the winding direction of the secondary coil. The winding direction of the secondary coil is a direction of the secondary coil winding from a secondary side static electrical point; the winding direction of the shielding coil is a direction winding from a first static electrical point to a tail end of the shielding coil; the winding direction of the auxiliary winding is a direction winding from a second static electrical point to a tail end of the auxiliary winding.

Optionally, the secondary coil layer includes a first secondary coil layer and a second secondary coil layer, respectively located on both sides of the primary coil layer,. The shielding layer is disposed between the first secondary coil layer and the primary coil layer.

Optionally, the first secondary coil layer is a top secondary coil layer and the second secondary coil layer is a bottom secondary coil layer. Alternatively, the first secondary coil layer is the bottom secondary coil layer and the second secondary coil layer is the top secondary coil layer. The bottom secondary coil layer, the primary coil layer and the top secondary coil layer are arranged sequentially from bottom to top.

Optionally, a top shielding layer is disposed between the top secondary coil layer and the primary coil layer; a bottom shielding layer is arranged between the bottom secondary coil layer and the primary coil layer. At least one of the top shielding layer and the bottom shielding layer comprises the shielding coil and the auxiliary winding.

Optionally, the number of turns of the auxiliary winding in the shielding layer is at least one turn more than the total turns of the secondary coil, and the total turns of the secondary coil is the sum of the number of turns of the first secondary coil layer and the number of turns of the second secondary coil layer.

Optionally, the number of turns of the first secondary coil layer and the number of turns of the second secondary coil layer are each equal to one turn, and the number of turns of the auxiliary winding is greater than 3.

Optionally, the number of turns of the shield coil is greater than 1.5 turns.

Optionally, the difference between the number of turns of the auxiliary winding and the number of turns of the secondary coil layer is comparable to the number of turns of the shield winding.

Optionally, the number of turns of the shielding coil is smaller than the number of turns of the auxiliary winding set in the same layer.

Optionally, the wire width of the shielding coil is greater than the wire width of the auxiliary winding set in the same layer.

Optionally, among the top shielding layer and the bottom shielding layer, the shielding layer that does not contain the auxiliary winding is another shielding layer. The wire width of the shielding coil of the another shielding layer is comparable to the wire width of the secondary coil adjacent to the another shielding layer.

Optionally, in the same shielding layer, the auxiliary winding is located in an inner ring of the shielding coil.

Optionally, the bottom shielding layer and the top shielding layer each comprise the shielding coil and the auxiliary winding.

According to a second aspect, an embodiment of the application discloses a planar transformer including a bottom secondary coil, a bottom shielding layer, a primary coil, a top shielding layer and a top secondary coil from bottom to top, wherein the top shielding layer and the bottom shielding layer both comprise a shielding coil. The top shielding layer or the bottom shielding layer further comprises a first auxiliary winding. The top shielding layer or the bottom shielding layer comprises the clockwise shielding coil of N3 turns and the counterclockwise first auxiliary winding of N4 turns, N4 being greater than 3. A compensation common mode current of the planar transformer is adjusted by adjusting the ratio of N3 to N4.

Optionally, the bottom secondary coil is wound clockwise or counterclockwise starting from a secondary static electrical point potential. The top secondary coil and the bottom secondary coil are connected in series or in parallel, and the winding direction of the top secondary coil is the same as the winding direction of the bottom secondary coil.

Optionally, the counterclockwise first auxiliary winding of N4 turns is provided in the inner ring of the clockwise shielding coil of N3 turns, and N3 is larger than 1.

Optionally, the area of the clockwise shielding coil of N3 turns and the value of N3 are changeable to adjust the compensating common mode current of the transformer.

According to a third aspect, an embodiment of the application discloses a power converter including a planar transformer as disclosed in any of the above first aspect, or a planar transformer as disclosed in any of the above second aspect.

Optionally, the number of PCB layers of the planar transformer is 6-14 when the output voltage of the power converter is between 5v-24v.

According to a fourth aspect, an embodiment of the application discloses a circuit board with power conversion function, the circuit board including a planar transformer as disclosed in any of the above first aspect, or a planar transformer as disclosed in any of the above second aspect.

Optionally, at least a portion of the planar transformer is integrally formed with the circuit board, or the planar transformer is detachably disposed on the circuit board.

Compared with the prior art, the application has the following beneficial effects:

The planar transformer of the application is suitable for power converters, adapters or chargers with variable output voltages (5V-9V/5V-11V/5V-12V/5V-15V/5V-20V).

According to different voltage output ranges of the power conversion circuit, the ratio of the clockwise/counterclockwise coil of the shielding layer and the auxiliary winding can be flexibly designed to vary between 0.1 and 1.5/1. The optimal EMI performance could be achieved by selecting an appropriate ratio combination, and meanwhile, the number of layers of the PCB of the planar transformer can be reduced, so that the cost of the planar transformer is favorably reduced.

Other beneficial effects of the application will be described by presenting specific technical features and technical schemes in specific embodiments, and those skilled in the art will understand the beneficial technical effects brought about by the technical features and technical solutions through the presentation of the technical features and technical solutions.

### BRIEF DESCRIPTION OF THE DRAWINGS

In order to more clearly illustrate the technical solutions in the embodiments of the present application, the following further describes the present application with reference to the accompanying drawings and embodiments. It is apparent that the accompanying drawings in the following description are only for some embodiments of the application. For a person of ordinary skill in the art, other drawings may be obtained from these accompanying drawings without creative effort.
FIG. 1 is a schematic cross-sectional view of the multilayer coil of a planar transformer in accordance with Embodiment 1 and Embodiment 2 of the application;
FIG. 2 is a diagram of coil winding of each layer of the planar transformer in accordance with the Embodiment 1 and Embodiment 2 of the application;
FIG. 3 is a diagram of coil winding of the top or bottom shielding layer of the planar transformer in accordance with the Embodiment 1 of the application;
FIG. 4 is a diagram of coil winding of the bottom shielding layer and the bottom secondary coil of the planar transformer in accordance with the Embodiment 1 of the application;
FIG. 5 is a diagram of coil winding of the top shielding layer and the top secondary coil of the planar transformer in accordance with the Embodiment 1 of the application;
FIG. 6 is a diagram of a coil winding structure of the top or bottom shielding layer of the planar transformer in accordance with the Embodiment 2 and Embodiment 3 of the application;
FIG. 7 is a schematic cross-sectional view of the multilayer coil of the first planar transformer in accordance with the Embodiment 3 of the application;
FIG. 8 is a diagram of coil winding of each layer of the first planar transformer in accordance with the Embodiment 3 of the application;
FIG. 9 is a diagram of coil winding of each layer of the second planar transformer in accordance with the Embodiment 3 of the application;
FIG. 10 is a schematic cross-sectional view of the multilayer coil of the third planar transformer in accordance with the Embodiment 3 of the application;
FIG. 11 is a diagram of coil winding of each layer of the third planar transformer in accordance with the Embodiment 3 of the application;
FIG. 12 is a schematic diagram of a first application of a transformer in accordance with an embodiment of the application;
FIG. 13 is a schematic diagram of a second application of a transformer in accordance with an embodiment of the application;
FIG. 14 is a schematic diagram of a shielding layer disclosed in an embodiment of the application.

### DETAILED DESCRIPTION

Through the following detailed description with reference to the accompanying drawings and embodiments, the above and other features, advantages and aspects of the present application will become more apparent. It should be understood that the specific embodiments described herein are intended only to explain the application, and are not intended to limit it.

To illustrate the technical solutions of the application, specific embodiments are used for description below.

### Embodiment 1:

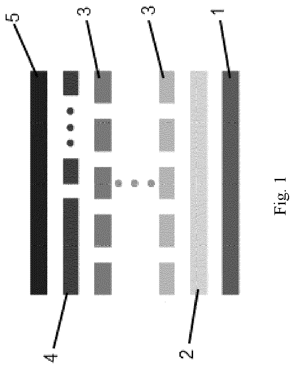

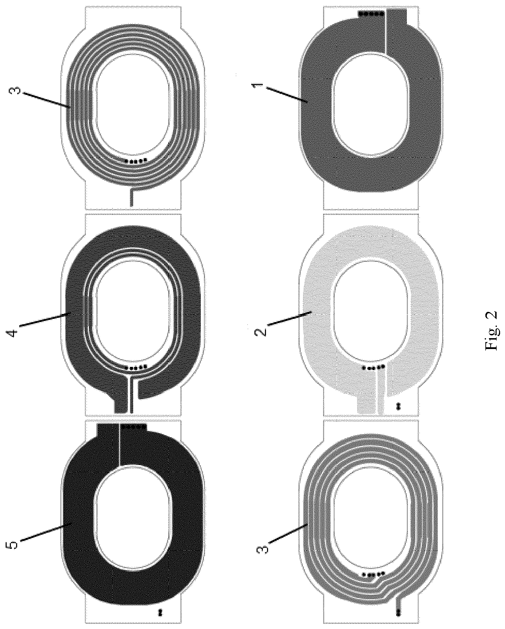

As shown in FIG.1, this embodiment provides a planar transformer with a secondary-primary structure, including a bottom secondary coil 1, a bottom shielding layer 2, a primary coil layers 3, a top shielding layer 4 and a top secondary coil layer 5 from bottom to top. According to different output power specifications, the top shielding layer 4 and the bottom shielding layer 2 can be connected in series or in parallel. Between the bottom secondary coil and the top secondary coil are the middle layer which may be a multi-layer structure. The planar transformer as a whole may be a structure of 6~14 layer, as shown in FIG. 2, which is a schematic diagram of a 6-layer structure.

The bottom secondary coil 1 is wound clockwise or counterclockwise starting from a secondary static electrical point potential. The top secondary coil 5 is wound in the same direction as the bottom secondary coil 1.

That is, with the premise of diverse functions of the planar transformer, in order to further reduce the number of PCB layers of the planar transformer to achieve miniaturization of the planar transformer, the application discloses a planar transformer, which is used in flyback transformer or resonant in LLC topology. The planar transformer disclosed by the application includes the primary coil layer, the secondary coil layer, the shielding layer, etc., wherein the shielding layer is arranged between the primary coil layer and the secondary coil layer. Each functional layer can be realized by a multilayer PCB to achieve different functions of the planar transformer, for example, the coils of each functional layer may be realized through printing.

Among them, the secondary coil layer includes a first secondary coil layer and a second secondary coil layer, respectively located on both sides of the primary coil layer. The secondary coil layer is provided with a secondary coil. The shielding layer may be provided between the first secondary coil layer and the primary coil layer. The shielding layer is provided with a shielding coil. Specifically, the primary coil layer may be one layer, or two layers or multiple layers, and the primary coil layer is provided with a primary coil. The primary coil layer and the secondary coil layer may be arranged in the following way: the first secondary coil layer-the primary coil layer-the second secondary coil layer in sequence, or the primary coil layer-the first secondary coil layer-the second secondary coil layer-the primary coil layer in sequence, etc.. It should be noted that, the arrangement of the primary coil layer and the secondary coil layer are not limited. The person skilled in the art may adjust the arrangement of the primary coil layer and the secondary coil layer according to the description of this application. In the specific implementation, it is only necessary to set the shielding layer between the first secondary coil layer and the primary coil layer.

In specific embodiments, if the first secondary coil layer is the top secondary coil layer, the second secondary coil layer is the bottom secondary coil layer. Conversely, if the first secondary coil layer is the bottom secondary coil layer, the second secondary coil layer is the top secondary coil layer.

In this application, the winding direction of the secondary coil, i.e., the direction of winding, refers to the winding direction of the secondary coil starting from the secondary side static electrical point. It may be clockwise or counterclockwise.

To facilitate routing of the secondary coil, please refer to FIG. 1, in a preferred embodiment, the bottom layer secondary coil 1, the primary coil layer 3 and the top layer secondary coil 5 are sequentially arranged from bottom to top. In this embodiment, the bottom layer secondary coil 1 and the top layer secondary coil 5 are arranged in the outer layer of the primary coil, which may avoid transmitting the current of the secondary coil through the vias in the printed circuit board (PCB), thus reducing the interference caused by large current of the secondary coil transmitted through the vias.

Wherein, the top shielding layer 4 and the bottom shielding layer 2 both includes the shielding coils 21. At least one shielding coil 21 of the top shielding layer 4 and the bottom shielding layer 2 includes clockwise coils of N1 turns and counterclockwise coils of N2 turns, the sum of N1 and N2 being less than 1.

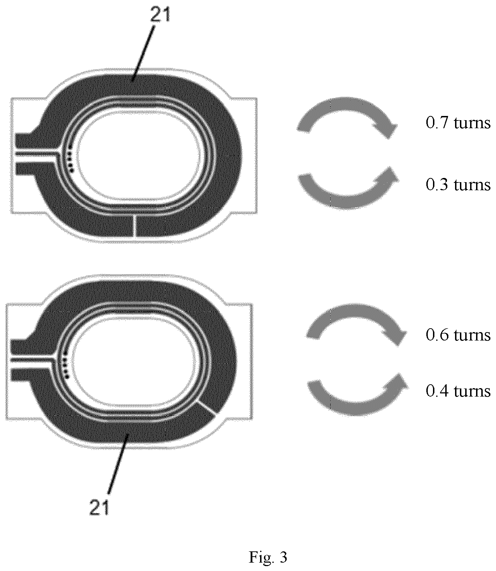

As one embodiment, the shielding coils 21 of both the top shielding layer 4 and the bottom shielding layer 2 include clockwise coils of Nlturns and counterclockwise coils of N2 turns, and the sum of N1 and N2 is less than 1. The optimal EMI performance may be achieved by adjusting the ratio of the clockwise coils to the counterclockwise coils of the top shielding layer 4 and the bottom shielding layer 2. As shown in FIG. 3, the ratio of the clockwise coils to the counterclockwise coils is 0.7/0.3 or 0.6/0.4.

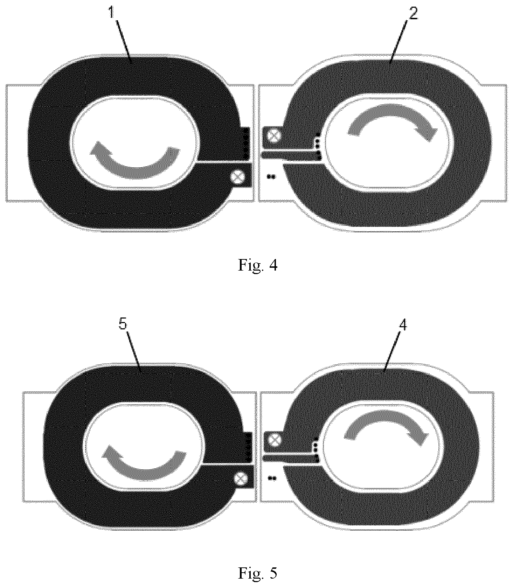

As an embodiment, the top shielding layer 4 includes clockwise coils of Nlturns and counterclockwise coils of N2 turns. As shown in FIG. 4, the shielding coil 21 of the bottom shielding layer 2 is a 1-turn coil starting from the primary static electrical point potential, and the winding direction of the bottom shielding layer 2 is the same as that of the bottom secondary coil 1.

As an embodiment, the bottom layer shielding layer 2 includes clockwise coils of N1 turms and counterclockwise coils of N2 turns. As shown in FIG. 5, the shielding coil 21 of the top layer shielding layer 4 is a 1-turn coil starting from the primary static electrical point potential, and the winding direction of the top layer shielding layer 4 is the same as that of the top layer secondary coil 5.

The coils of the top layer secondary coil 5 or the bottom layer secondary coil 1 are full turns, preferably 1 or 2 turns. The wide copper foil as the coil can pass high currents and is suitable for adapters.

For adapters or chargers with output voltages of 5-20v, 5-9v and 5-11v, the total number of layers of the PCB is 6 to 14 layers.

### Embodiment 2:

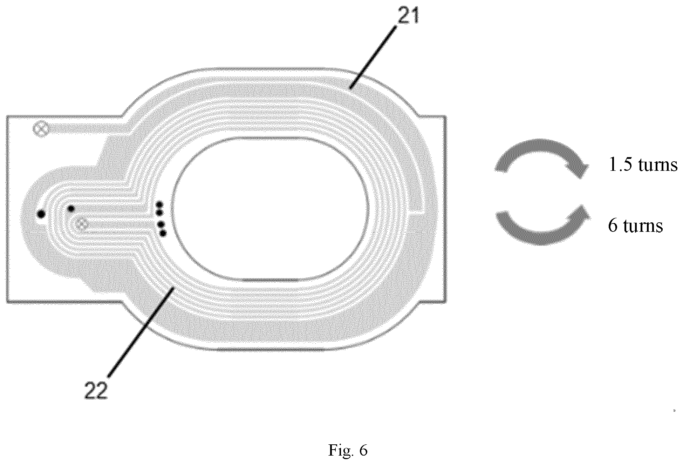

Referring to FIG. 6, this embodiment provides a planar transformer different from Embodiment 1 in that: the top shielding layer 4 or the bottom shielding layer 2 further includes a first auxiliary winding 22; the top shielding layer 4 or the bottom shielding layer 2 includes the clockwise shielding coil 21 of N3 turns and the counterclockwise first auxiliary winding 22 of N4 turns, and N4 is larger than 3. The optimal EMI performance may be achieved by adjusting the clockwise-counterclockwise ratio of turns of the shielding coil 21 and the first auxiliary windings 22 in combination with the copper-platinum area of the shielding layer. According to different output specifications, the ratio can be 2/6 or 1.5/6, or other more ratios.

That is, this embodiment differs from Embodiment 1 in that the top shielding layer 4 and/or the bottom shielding layer 2 are added to the primary coil layer and the secondary coil layer, wherein at least one of the top shielding layer 4 and the bottom shielding layer 2 may be used to suppress the common mode current by means of the shielding coil 21 and the first auxiliary winding 22 together, so as to achieve the optimal EMI performance. That is, the auxiliary winding is added in the shielding layer (the top shielding layer 4, the bottom shielding layer 2), and the common mode currents in different directions are suppressed by the shielding coil and the auxiliary winding together.

To distinguish between the auxiliary windings in the top shielding layer 4 and the bottom shielding layer 2, the auxiliary winding in one layer of the top shielding layer 4 or the bottom shielding layer 2 may be referred to as the first auxiliary winding 22, and the auxiliary winding in the other layer as the second auxiliary winding 23.

For ease of description, in specific embodiments, the first auxiliary winding 22 and the second auxiliary winding 23 have different numbers of windings (i.e., turns), for example, if the first auxiliary winding 22 has more winding turns, the second auxiliary winding 23 has fewer winding turns.

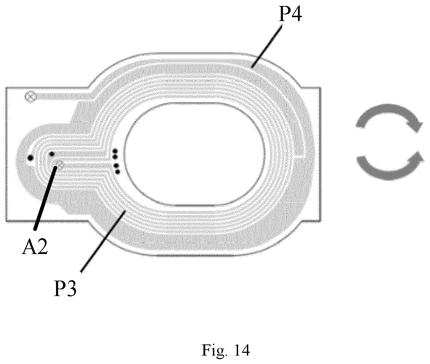

Referring to FIG. 6 and FIG. 14, a schematic diagram of a shielding layer of the application is disclosed. The shielding layer is used to be provided between the primary coil layer and the secondary coil layer. The shielding layer of the application includes a shielding coil P3 and an auxiliary winding P4.

Wherein, one end A1 of the shielding coil P3 is connected to a first static electrical point, and the other end is suspended. One end A2 of the auxiliary winding P4 is connected to a second first static electrical point. The auxiliary winding P4 is used for supplying power to the functional circuit of the planar transformer. In this application, the first static electrical point and the second static electrical point are both static electrical points of the primary circuit. The first static electrical point and the second static electrical point may be the same static electrical point, or may be two different static electrical points. It should be noted that in the application, there is no restriction on the power supply terminal of the auxiliary winding P4, that is, the power supply terminal of the auxiliary winding P4 may be one end of the auxiliary winding P4 connected to the static electrical point of the primary coil, or the end connected to the second static electrical point, or other terminals.

In the application, the winding direction of the shielding coil P3 is opposite to the winding direction of the secondary coil; the winding direction of the auxiliary winding P4 is the same as the winding direction of the secondary winding. In the application, the winding direction of the secondary coil refers to the winding direction of the secondary coil starting from the secondary side static electrical point. The winding direction of the shielding coil P3 is the direction of winding from the first static electrical point to the tail end of the shielding coil. The winding direction of the auxiliary winding P4 is the direction of winding from the second static electrical point to the tail end of the auxiliary winding. In this application, as an example, the shielding coil P3 is wound clockwise and the secondary coil is wound counterclockwise.

In the application, the winding direction of the shielding coil P3 is opposite to the winding direction of the secondary coil, so that the common mode current between the primary coil and the secondary coil can be suppressed. Moreover, one end of the auxiliary winding P4 is connected to the static electrical point of the primary coil, and the winding direction of the auxiliary winding P4 is the same as the winding direction of the secondary coil, so that the auxiliary winding P4 can also suppress the common mode current in the opposite direction from the shielding coil P3. That is, the shield coil P3 and the auxiliary winding P4 may each suppress the common mode currents in the opposite directions, thereby improving EMI performance. Compared with the prior art, where a part of the coil is led out from the primary coil or the secondary coil to form a composite shielding with the shielding layer, the solution of the embodiment of the application does not require a cross-layer lead wire, but simply forms a coil in the shielding layer itself, thus effectively reducing the complexity of the process, especially in a compact PCB structure, and significantly reducing processing cost and improving reliability of the planar transformer.

In addition, in the scheme disclosed in the application, as the auxiliary winding is formed in the shielding layer, on the one hand, the auxiliary winding can realize dual functions of common mode current suppression and power supply; on the other hand, because there is no need for a separate auxiliary winding, the number of layers of the PCB can be reduced, and the existing shielding layer resources are fully utilized, which, in turn, makes the planar transformer compact.

In the embodiment, the counterclockwise first auxiliary winding 22 of N4 turns is provided in the inner ring of the clockwise shielding coil 21 of N3 turns, wherein N3 is larger than 1.

The area of the clockwise shielding coil 21 of N3 turns and the value of N3 can be changed to adjust the compensation common mode current of the transformer.

As shown in FIG. 6, the area of the shielding coil 21, i.e., the width of the copper foil coil, can be adjusted according to the actual area of the PCB. The optimal EMI performance is obtained by making full use of the copper foil area and combining the ratio of N3 to N4.

Specifically, the value of N3 and the area of the clockwise shielding coil can be determined empirically.

In particular embodiments, the optimal EMI performance is achieved by adjusting the ratio of the number of turns N3 of the shielding coil to the number of turns N4 of the auxiliary winding (i.e., the clockwise-counterclockwise turns ratio).

Specifically, in the embodiment employing the sandwich structure shown in FIG. 2, optionally, the number of turns of the secondary coil of each layer is equal to 2, that is, the number of turns of the first secondary coil layer and the number of turns of the second secondary coil layer are both equal to 1; the number of turns N4 of the coil of the auxiliary winding is larger than 3.

Optionally, the number of turns of the auxiliary winding in the shielding layer is at least 1 turn more than the sum of the secondary coils. In the application, the sum of the secondary coils is the sum of the number of coil turns of the first secondary coil layer and the number of the coil turns of the second secondary coil layer. In the embodiment, by configuring the relationship between the number of coil turns of the auxiliary winding and the number of coil turns of the secondary coil, the common mode current suppression can be achieved by the auxiliary winding.

Optionally, the number of turns N3 of the shielding coil is greater than 1.5 turns.

In a preferred embodiment, the difference between the number of coil turns N4 of the auxiliary winding and the number of coil turns of the secondary winding layer, is comparable to the number of turns N3 of the shielding coil. Specifically, the number of turns N3 of the shielding coil refers to the number of turns of the shielding coil of all the shielding layers in the planar transformer. In this embodiment, the term "is comparable to" means that the difference in the number of turns described above is substantially equivalent to the number of turns N3 of the shielding coil, although there may be a difference of less than 5 turns in a specific implementation. In this embodiment, by constructing the equivalent relationship between the turns difference of the auxiliary winding and the secondary coil layer and the number of turns N3 of the shielding coil, the auxiliary winding and the shielding coil may respectively suppress the common mode current between the auxiliary winding and the secondary coil layer, improving the EMI performance.

In a preferred embodiment, the number of turns N3 of the shielding coil is smaller than the number of turns N4 of the auxiliary winding set in the same layer. In this embodiment, the number of turns of the shielding coil is smaller than the number of turns of the auxiliary winding set in the same layer, so that the shielding layer may fully utilize the existing shielding layer to output more power via the auxiliary winding, in addition to shielding and suppressing the common mode currents.

In an alternative embodiment, the wire width of the shielding coil is greater than the wire width of the auxiliary winding set in the same layer. As a result, the wire width of the shielding coil, i.e., the area of the copper foil, may be fully utilized to achieve a better shielding effect, and obtain better EMI performance.

In an alternative embodiment, in the top shielding layer and the bottom shielding layer, the shielding layer that does not contain the auxiliary winding is another shielding layer. The wire width of the shielding coil of the another shielding layer is comparable to the wire width of the secondary coil adjacent to the another shielding layer. In this embodiment, the term "is comparable to" means that the widths of the two wires are substantially equivalent, although in particular implementations, an appropriate size difference may be allowed, for example, the difference of about 30%.

As a result, the wire width of the shielding coil of the another shielding layer, namely the area of the copper foil, may be fully utilized to achieve a better shielding effect and obtain better EMI performance.

### Embodiment 3:

This embodiment provides a planar transformer based on Embodiment 1, by adding an auxiliary winding into an inner ring of the shielding coil to be designed in the same layer, so that the thickness of the total board layer is reduced, and the cost is reduced.

Specifically, the added auxiliary winding may be realized by the auxiliary winding of Embodiment 2, that is, the shielding layer structure of Embodiment 2 may be added between the primary coil layer and the secondary coil layer. For the understanding of those skilled in the art, taking the secondary coil layer outside and the primary coil layer inside as examples, i.e., the sandwich structure shown in FIG. 1, FIG.7, and FIG.10. The details are as follows:

### I. adding auxiliary winding with a few turns

According to the distinguishing description rule described above, the auxiliary winding with a small number of turns is the second auxiliary winding 23, that is, the shielding layer includes the clockwise shielding coil 21 of N1 turns and the counterclockwise second auxiliary winding 23 of N2 turns.

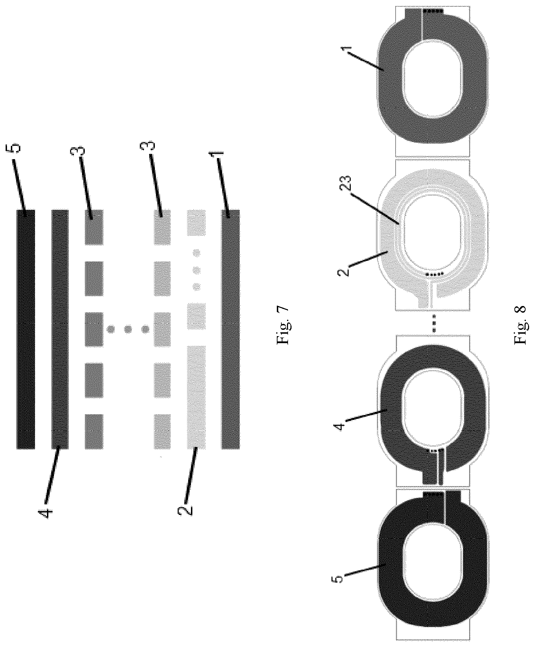

As shown in FIG.7 and FIG.8, the bottom shielding layer 2 further includes the second auxiliary winding 23 disposed within inner ring of the shield coil of the bottom shielding layer 2.

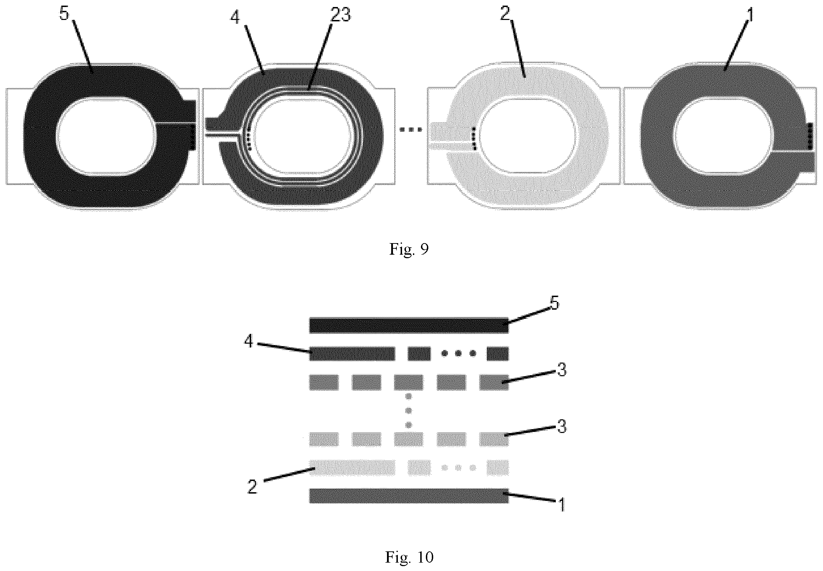

Alternatively, as shown in FIG. 1 and FIG.9, the top shielding layer 4 may further include the second auxiliary winding 23 disposed within inner ring of the shield coil of the top shielding layer 4.

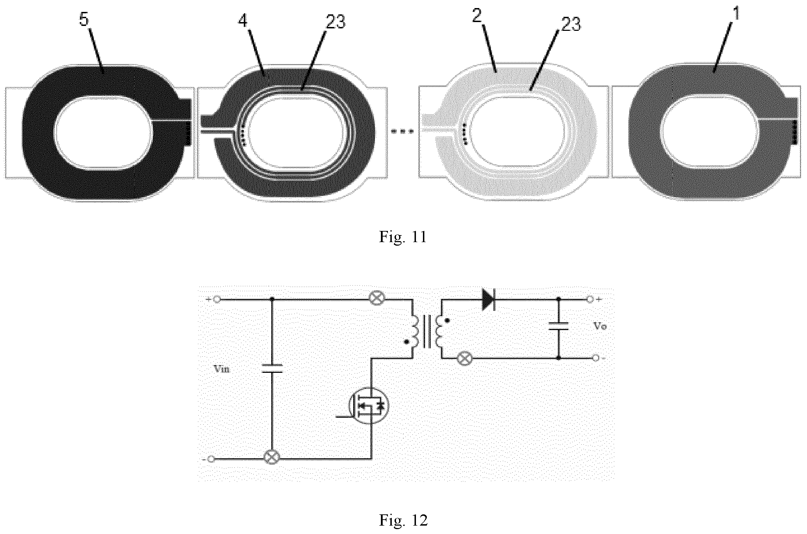

Alternatively, as shown in FIG.10 and FIG. 11, both the bottom shielding layer 2 and the top shielding layer 4 include the second auxiliary winding 23 disposed within inner ring of the shield coil of the bottom shielding layer 2 and the top shielding layer 4.

Wherein, the number of turns of the second auxiliary winding 23 is less than 3.

### II. adding auxiliary winding with more turns

Referring to FIG. 6, according to the above distinguish description rule, the auxiliary winding with more turns is the first auxiliary winding 22, i.e., the shielding layer includes the clockwise shielding coil 21 of N3 turns and the counterclockwise first auxiliary winding 22 of N4 turns.

In one embodiment, the shielding layer is disposed between the top secondary coil layer 5 and the primary coil layer 3, that is, the first secondary coil layer is the top secondary coil layer 5 and the second secondary coil layer is the bottom secondary coil layer 1. In this embodiment, the top shielding layer 4 adopts the shielding layer structure disclosed in the above embodiments and includes the clockwise shielding coil 21 of N3 turns and the counterclockwise first auxiliary winding 22 of N4 turns, and there is no limitation on the specific structure of the bottom shielding layer 2.

In another embodiment, the shielding layer is disposed between the bottom secondary coil layer 1 and the primary coil layer 3, that is, the first secondary coil layer is the bottom secondary coil layer 1 and the second secondary coil layer is the top secondary coil layer 5. In this embodiment, the bottom shielding layer 2 adopts the shielding layer structure disclosed in the above embodiment and includes the clockwise shielding coil 21 of N3 turns and the counterclockwise first auxiliary winding 22 of N4 turns, and there is no limitation on the specific structure of the top shielding layer 4.

It should be noted that in other embodiments, the bottom shielding layer 2 and the top shielding layer 4 both may adopt the shielding layer structure disclosed in the above embodiments, and includes the clockwise shielding coil 21 of N3 turns and the counterclockwise first auxiliary winding 22 of N4 turns.

In an optional embodiment, in the same shielding layer, the auxiliary winding is located in the inner ring of the shielding coil.

In an optional embodiment, the bottom layer shielding layer 2 and the top layer shielding layer 4 both include the shielding coils and the auxiliary windings. In the specific implementation, the clockwise-counterclockwise ratio of turns in the bottom layer shielding layer 2 and the top layer shielding layer 4 may be simultaneously adjusted, or the clockwise-counterclockwise ratio of turns in one of the shielding layers can be fixed, and the clockwise-counterclockwise ratio of turns in the other shielding layer may be adjusted.

It should be noted that in the specific implementation, it is also possible to use "the primary coil layer"-" the top shielding layer"-"the secondary coil layer"-"the bottom shielding layer" -"the primary coil layer" structure, which should be considered as a simple replacement of the scheme provided by the application.

One end of the shielding coil of the top shielding layer 4 or the bottom shielding layer 2 is connected to the primary static electrical point, and the other end of the shielding coil of the top shielding layer 4 or the bottom shielding layer 2 is suspended, or connected in series with the primary coil 3, or connected in series with the second auxiliary winding 23.

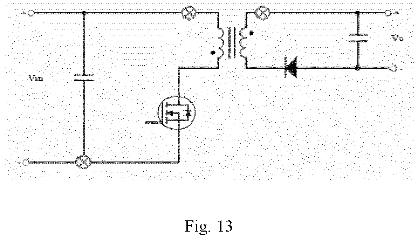

As shown in FIG.12 and FIG.13,⊗ marks the primary static electrical point and the secondary primary static electrical point. The output has two applications. FIG.12 shows that the anode of the output diode is connected to the transformer, and the cathode of the output diode is connected to the anode of the output capacitor. FIG.13 shows that the cathode of the output diode is connected to the transformer, and the anode of the output diode is connected to the cathode of the output capacitor. In practical, for the convenience of PCB wiring, the starting end of the shielding layer may be connected to one of two static electrical points of the input according to the actual application.

For the planar transformer of the application, the ratio of clockwise/counterclockwise coil of the shielding layer can be flexibly designed to vary between 0.1/0.9 and 0.9/0.1 according to different voltage output ranges of the power supply conversion circuit. The ratio of clockwise/counterclockwise coil of the shielding layer and the auxiliary winding can be varied between 1/10 ~1.5/1. The optimal EMI performance could be achieved by selecting an appropriate ratio combination, at the same time, the number of PCB layers of the planar transformer could be reduced, which is beneficial to reduce the cost of the planar transformer.

### Embodiment 4:

This embodiment provides a power converter which adopts any one of the planar transformers described in the foregoing embodiments. When the output voltage of the power converter is between 5v to 24v, the PCB board of the planar transformer is designed with 6 to 14 layers.

The planar transformer, includes a bottom secondary coil, a bottom shielding layer, a primary coil, a top shielding layer and a top secondary coil from bottom to top. The top shielding layer and the bottom shielding layer both include a shielding coil. At least one of the top shielding layer and the bottom shielding layer includes clockwise coils of N1 turns and counterclockwise coils of N2 turns. Alternatively, the top shielding layer or the bottom shielding layer further includes a first auxiliary winding. The top shielding layer or the bottom shielding layer includes the clockwise shielding coil of N3 turns and the counterclockwise first auxiliary winding of N4 turns, N4 being larger than 3. The compensation common mode current of the planar transformer is adjusted by adjusting the ratio of N1 to N2 or the ratio of N3 to N4.

The planar transformer of the application is suitable for adapters or chargers with output voltages range of 5V-24V, or power converters, adapters or chargers with a fixed voltage (5V/12V/15V/19V/20V/24V), or a variable voltage (5V-9V/5V-11V/5V-12V/5V-15V/5V-20V) within this voltage range.

The application also provides a circuit board with power conversion function. The circuit board includes the planar transformer disclosed in any of the above-mentioned embodiments. As a non-limiting example, the circuit board of this embodiment could be either a main board of a power adapter or a circuit board of other electrical and electronic products, as long as the circuit board is provided with the planar transformer of this embodiment.

In an optional embodiment, at least a portion of the planar transformer is integrally formed with the circuit board, or the planar transformer is detachably disposed on the circuit board.

It should be appreciated by those skilled in the art that the foregoing various preferred embodiments may be freely combined, superimposed, without conflict.

It should be understood that the embodiments above are merely illustrative and not restrictive and that, without departing from the basic principles of the application, various obvious or equivalent modifications or substitutions that may be made by a person skilled in the art, shall fall within the protection scope of the claims of the application.

## Claims

1. A planar transformer, comprising a primary coil layer, a secondary coil layer, and a shielding layer, wherein:
the shielding layer is disposed between the primary coil layer and the secondary coil layer, a primary coil is disposed in the primary coil layer, and a secondary coil is disposed in the secondary coil layer;
the shielding layer comprises:
a shielding coil, with one end connected to a first static electrical point and the other end suspended; and
an auxiliary winding with one end connected to a second static electrical point;
and the auxiliary winding supplies power to a functional circuit of the planar transformer;
the winding direction of the shielding coil is opposite to the winding direction of the secondary coil; the winding direction of the auxiliary winding is the same as the winding direction of the secondary coil; wherein the winding direction of the secondary coil is a direction of the secondary coil winding from a secondary side static electrical point; the winding direction of the shielding coil is a direction winding from the first static electrical point to a tail end of the shielding coil; the winding direction of the auxiliary winding is a direction winding from the second static electrical point to a tail end of the auxiliary winding.

2. The planar transformer of claim 1, wherein the secondary coil layer comprises a first secondary coil layer and a second secondary coil layer, respectively located on both sides of the primary coil layer; the shielding layer is disposed between the first secondary coil layer and the primary coil layer.

3. The planar transformer of claim 2, wherein the first secondary coil layer is a top secondary coil layer and the second secondary coil layer is a bottom secondary coil layer;
or the first secondary coil layer is the bottom secondary coil layer and the second secondary coil layer is the top secondary coil layer;
wherein the bottom secondary coil layer, the primary coil layer and the top secondary coil layer are sequentially arranged from bottom to top.

4. The planar transformer of claim 3, wherein a top shielding layer is disposed between the top secondary coil layer and the primary coil layer; a bottom shielding layer is arranged between the bottom secondary coil layer and the primary coil layer; at least one of the top shielding layer and the bottom shielding layer comprises the shielding coil and the auxiliary winding.

5. The planar transformer of claim 2, wherein the number of turns of the auxiliary winding in the shielding layer is at least one turn more than the total turns of the secondary coil, the total turns of the secondary coil is the sum of the number of turns of the first secondary coil layer and the number of turns of the second secondary coil layer.

6. The planar transformer of claim 3, wherein the number of turns of the first secondary coil layer and the number of turns of the second secondary coil layer are each equal to 1 turn, and the number of turns of the auxiliary winding is greater than 3.

7. The planar transformer of claim 6, wherein the number of turns of the shield coil is greater than 1.5 turns.

8. The planar transformer of any one of claims 1 to 7, wherein the difference between the number of turns of the auxiliary winding and the number of turns of the secondary coil layer is comparable to the number of turns of the shield winding.

9. The planar transformer of any one of claims 1 to 7, wherein the number of turns of the shielding coil is smaller than the number of turns of the auxiliary winding located in the same layer.

10. The planar transformer of any one of claims 1 to 7, wherein the wire width of the shielding coil is greater than the wire width of the auxiliary winding located in the same layer.

11. The planar transformer of claim 4, wherein, among the top shielding layer and the bottom shielding layer, the shielding layer that does not contain the auxiliary winding is another shielding layer; the wire width of the shielding coil of the another shielding layer is comparable to the wire width of the secondary coil adjacent to the another shielding layer.

12. The planar transformer of any one of claims 1 to 7, wherein in the same shielding layer, the auxiliary winding is located in an inner ring of the shielding coil.

13. The planar transformer of any one of claims 4 to 7, wherein the bottom shielding layer and the top shielding layer each contain the shielding coil and the auxiliary winding.

14. A planar transformer, comprising a bottom secondary coil, a bottom shielding layer, a primary coil, a top shielding layer and a top secondary coil from bottom to top; wherein the top shielding layer and the bottom shielding layer both comprise a shielding coil; the top shielding layer or the bottom shielding layer further comprises a first auxiliary winding; the top shielding layer or the bottom shielding layer comprises the clockwise shielding coil of N3 turns and the first counterclockwise auxiliary winding of N4 turns; N4 is greater than 3; and a compensation common mode current of the planar transformer is adjusted by adjusting the ratio of N3 to N4.

15. The planar transformer of claim 14, wherein the bottom secondary coil is wound clockwise or counterclockwise starting from a secondary static electrical point potential; the top secondary coil and the bottom secondary coil are connected in series or in parallel, and the winding direction of the top secondary coil is the same as the winding direction of the bottom secondary coil.

16. The planar transformer of claim 14, wherein the first counterclockwise auxiliary winding of N4 turns is provided in the inner ring of the clockwise shielding coil of N3 turns, and N3 is larger than 1.

17. The planar transformer of claim 16, wherein the area of the clockwise shielding coil of N3 turns and the value of N3 are variable to adjust compensating common mode current of the transformer.

18. A power converter, comprising a planar transformer of any one of claims 1 to 13.

19. The power converter of claim 18, wherein the number of PCB layers of the planar transformer is 6-14 when the output voltage of the power converter is between 5v-24v.

20. A circuit board with power conversion function, comprising a planar transformer of any one of claims 1 to 13, or a planar transformer of any one of claims 14 to 17.

21. The circuit board of claim 18, wherein at least a portion of the planar transformer is integrally formed with the circuit board, or the planar transformer is detachably disposed on the circuit board.
